# EUROPÄISCHE PATENTSCHRIFT

(11) **EP 3 394 191 B1**
(45) Veröffentlichungstag und Bekanntmachung des Hinweises auf die Patenterteilung: **26.01.2022**
(21) Anmeldenummer: 16819092.4
(22) Anmeldetag: 21.12.2016
(51) Int. Cl.: C09J 7/00, C09J 163/00, C09J 5/06

(54) **HITZEAKTIVIERBARES KLEBEBAND**
HEAT-ACTIVATED ADHESIVE TAPE
BANDE ADHÉSIVE ACTIVABLE À LA CHALEUR

(30) Priorität: 21.12.2015 DE 102015122438
(43) Veröffentlichungstag der Anmeldung: 31.10.2018
(73) Patentinhaber: Lohmann GmbH & Co. KG, 56567 Neuwied (DE)
(72) Erfinder: KOPF, Patrik, 56567 Neuwied (DE); KÜHL, Oliver, 56587 Straßenhaus (DE); KIRPAL, Franziska, 51375 Leverkusen (DE); RINGEL, Anja, 56587 Straßenhaus (DE)
(74) Vertreter: Molnia, David
(86) Internationale Anmeldenummer: PCT/EP2016/082266
(87) Internationale Veröffentlichungsnummer: WO 2017/109011

(56) Entgegenhaltungen:
- EP-A1- 1 746 119
- EP-A1- 2 700 683
- WO-A1-2010/136086
- HUNSTMAN: "ARALDITE GT 7072", , September 2012 (2012-09), XP002767876, Gefunden im Internet: URL:http://images02.cdn86.net/kps01/M00/01 /86/wKiAiVgqqI7X9I2mAAL1QRJUoRk159.pdf
- JANA: "ARALDITE GT 7072", , März 2011 (2011-03), XP002767877, Gefunden im Internet: URL:http://www.jana-ksa.net/products/pdf/a raldite/GT%207072%20-%20FG102005.pdf

## Beschreibung

### Technisches Gebiet

Die vorliegende Erfindung betrifft ein hitzeaktivierbares strukturelles Haftklebeband, das beispielsweise Verwendung finden kann zur dauerhaften Verklebung von Folien in einer Art und Weise, dass nahezu unzerstörbare Markierungselemente, Folienlaminierungen oder ähnliche Produkte entstehen, für die Montage kleinerer Anbauteile auf glatten Metall-, Glas- oder Keramikoberflächen oder auch zur Versiegelung von Schriftzügen bzw. graphischen Darstellungen anderer Art oder auch Emblemen und Ähnlichem.

### Stand der Technik

In industriellen Anwendungen werden in dem Maße zunehmend Klebeverbindungen eingesetzt, mit dem Ziel immer anspruchsvollere Verbindungen durch einen Klebevorgang sicher, sauber, dauerhaft verlässlich und ökonomisch herzustellen. Solche ständig wachsenden Ansprüche an insbesondere strukturelle Klebeverbindungen betreffen beispielsweise Klebkraft, Bruchkraft, Temperaturbeständigkeit, Klimawechselbeständigkeit oder auch Feuchtwärmebeständigkeit. Ein Haftklebeband ist im Gegensatz zu beispielsweise einem strukturellen Flüssigklebstoff nicht in der Lage, solche Anforderungen zu erfüllen. Nachteile wiederum eines entsprechenden Flüssigklebstoffs sind dessen relativ lange Taktzeit, ein häufiges Ausfließen am Rand und damit eine erschwerte saubere und exakte Applikation.

Ein hitzeaktivierbares, strukturelles, latent haftklebendes Klebeband beispielsweise als Stanzteil oder in Streifenform kann die Vorteile der beiden genannten Anwendungsarten "Klebeband" und "Flüssigklebstoff" ideal verbinden: Das Band wird als doppelseitiges Haftklebeband oder als trägerloses Transferband in seinem leicht haftklebrigen Zustand auf einen der beiden Fügepartner aufgebracht, sodann mit dem zweiten Fügepartner verbunden und anschließend in einem Erwärmungsprozess ausgehärtet, wodurch die strukturelle Festigkeit der Verbindung hergestellt wird. Der Erwärmungsprozess kann dabei wahlweise in einem Ofen stattfinden oder auch mit Hilfe von Infrarot-Erwärmung bzw. per Induktion erfolgen. Eine strukturelle Klebeverbindung zwischen zwei Fügepartnern heißt dabei, dass die Klebeschicht zusammen mit den beiden Fügepartnern eine homogene Struktur bildet.

Nun sind allgemein strukturelle Haftklebebänder auf Basis Epoxid, Polyurethan oder Cyanacrylat bereits seit einigen Jahren bekannt, für die oben beschriebenen speziellen Anwendungszwecke sind aber besondere, bisher nicht bekannte Rezepturen nötig, um die entsprechenden Anforderungen zu erfüllen.

Bekannt sind beispielsweise die beiden deutschen Patentanmeldungen DE10 2012 018630 A1 und DE 10 2011 008191 A1. Die erste dieser beiden Anmeldungen beschreibt ein hitzeaktivierbares strukturelles Klebeband mit verbesserter Resistenz gegen Feuchteunterwanderung. Der Klebstoff enthält neben den für ein strukturelles, auf Epoxid basierendes Klebeband typischen Komponenten noch ein Epoxisilan, welches als Kopplungsmittel zwischen Glas und Klebstoff dient. Diese Kopplung vermindert die Feuchteunterwanderung effektiv und bewirkt dadurch eine wesentlich höhere Resthaltekraft nach einer Feuchtwärmelagerung.

Die zweite genannte Anmeldung beschreibt ein hitzeaktivierbares doppelseitig haftklebendes und strukturelle Verklebungen ermöglichendes System insbesondere zur Verklebung eines Spiegelfußhalters auf der Frontscheibe eines Fahrzeugs, bei dem ein Trägermaterial mit einer Porosität von 20-90% beidseitig mit dem Klebstoffsystem derart beschichtet ist, dass unter Einwirkung hoher Temperaturen das Trägermaterial vollständig von dem Klebstoff durchdrungen wird, so dass nach erfolgter Abkühlung keine eindeutige Abgrenzung der Grammaturen von Klebstoffbeschichtungen und Trägermaterial mehr möglich, sondern nur noch die Grammatur des Gesamtsystems erkennbar ist.

Die in diesen beiden Schriften beanspruchten Rezepturen können allerdings die eingangs genannten hier beabsichtigten Verwendungszwecke nicht zufrieden stellend erfüllen.

Die US 2015/0240136 A1 zeigt einen strukturellen Klebefilm.

### Darstellung der Erfindung

Ausgehend von dem bekannten Stand der Technik ist es eine Aufgabe der vorliegenden Erfindung, ein Klebeband mit verbesserten Eigenschaften für diese Verwendungszwecke bereitzustellen, und dies insbesondere durch eine verbesserte Rezeptur der Klebemasse.

EP 1 746 119 A1 zeigt einen wärmehärtbaren Precursor einer gehärteten thermoexpandierten Folie.

EP 2 700 683 A1 zeigt einen strukturellen Klebefilm.

WO 2010/136086 A1 zeigt eine Klebefolie oder ein Klebeband auf Basis von Epoxiden.

Die Aufgabe wird durch ein Klebeband mit den Merkmalen des Anspruchs 1 gelöst. Vorteilhafte Weiterbildungen ergeben sich aus den Unteransprüchen sowie der vorliegenden Beschreibung. Entsprechend wird ein Klebeband, insbesondere ein Transferklebeband, aufweisend eine Epoxid basierende thermisch aushärtbare Klebemasse bereitgestellt. Erfindungsgemäß umfasst die Klebemasse ungefähr 10 bis ungefähr 60 Gewichtsprozent mindestens eines Epoxidharzes mit einem Epoxid-Äquivalent-Gewicht von 570 - 595 g/Äquivalent, ungefähr 1 bis ungefähr 5 Gewichtsprozent, bevorzugt ungefähr 3 Gewichtsprozent mindestens eines Härters, 0 bis ungefähr 5 Gewichtsprozent, bevorzugt ungefähr 1,5 bis ungefähr 1,7 Gewichtsprozent mindestens eines Beschleunigers, ungefähr 20 bis ungefähr 65 Gewichtsprozent, bevorzugt ungefähr 48 bis ungefähr 55 Gewichtsprozent, besonders bevorzugt ungefähr 33 Gewichtsprozent mindestens eines Schlagzähmodifikators, 7 bis ungefähr 30 Gewichtsprozent, besonders bevorzugt ungefähr 10 bis ungefähr 18,5 Gewichtsprozent mindestens eines thermoplastischen Polymers, bevorzugt Polyamid oder Polyethylvinylacetat, und 0 bis ungefähr 10 Gewichtsprozent, bevorzugt ungefähr 3 Gewichtsprozent eines Füllstoffs, bevorzugt hydrophober Kieselsäure, auf. Bevorzugter Weise addieren sich die Anteile dabei zu 100 Prozent bzw. in Ausführungsformen, die noch weitere Bestandteile enthalten, zu weniger als 100 Prozent.

Mit dem Begriff "Anteil" ist der Anteil der in der fertigen Klebemasse enthaltenen nichtflüchtigen Feststoffe gemeint, eventuell enthaltene Lösemittel, die bei der Herstellung des Bandes aus Klebstoff verdampft werden, werden bei der Berechnung des Feststoffgehaltes nicht berücksichtigt. Bevorzugte Epoxidharze können epoxyfunktionalisierte Oligomere oder Polymere auf Basis von Bisphenol A oder Bisphenol F vorzugsweise mit einer Molekülmasse von mehr als 700g/mol sein. Die Epoxidharze können flüssig oder fest sein und sich in ihren Epoxyäquivalenten unterscheiden. Die Zusammenstellung der Epoxidharze ist so zu wählen, dass daraus eine ausreichende Festigkeit und, zusammen mit den anderen Rezepturbestandteilen, ein geeignetes Fließverhalten der Klebemasse resultiert. Beispiele für feste Epoxidharze sind die Araldite^{™} GT, für flüssige Harze die Araldite^{™} GY der Fa. Huntsman, die Epon^{™}-Reihe der Fa. Hexion oder Bakelite EP^{™} der Firma Bakelite. Besonders geeignet sind mittelviskose Epoxidfestharze mit einem Erweichungspunkt von 60-90°C.

Das thermoplastische Polymer ist bevorzugt nicht-reaktiv bzw. nicht hitzeaktivierbar oder aushärtbar. Das thermoplastische Polymer kann dabei aus einer Vielzahl von herkömmlichen Polymeren bzw. Thermoplasten ausgewählt werden, wobei eine filmbildende Eigenschaft für die Auswahl ausschlaggebend sein kann. Das thermoplastische Polymer eignet sich insbesondere als Bindemittel.

Bevorzugt wird das thermoplastische Polymer in Art und Gehalt so gewählt, dass die Viskosität der Klebemasse bei Temperaturen unterhalb von 100 °C und bevorzugt bei Raumtemperatur ausreichend hoch zur Erzielung haftklebender Eigenschaften ist und bei hohen Temperaturen (z.B. über 100 °C.) in einem hohen Maße abnimmt, so dass dann eine gute Benetzung der zu verklebenden Oberfläche erreicht wird

In eingehenden Untersuchungen konnte festgestellt werden, dass ein langkettiges Polyamid effektiv die Schmelzviskosität des Klebstoffes erhöht, und dass daher ein geringer Anteil an Bindemittel eingesetzt werden kann. Als ebenso gut geeignet zeigte sich in weiteren Versuchen auch Polyethylvinylacetat als Bindemittel.

Es kann vorgesehen sein, dass das thermoplastische Polymer bzw. Bindemittel durch Auflösen oder Schmelzen der Epoxidharzmasse zugefügt wird. Bevorzugterweise kommt als Thermoplast ein heiß schmelzendes Polymer zum Einsatz. Bevorzugt umfasst das thermoplastische Polymer zumindest ein Polymer aus einer Gruppe von Polyurethanen, Polyacrylaten, Polyamiden (z.B. Technomelt Typen der Firma Henkel), Phenoxyharzen, Ethylenvinylacetaten (EVA, z.B. Levamelt Typen der Firma Lanxess) und/oder synthetischen Kautschuken.

Bei der Auswahl des Füllstoffs wird insbesondere auf eine polymerverstärkende Wirkung sowie eine Verbesserung der Lagerstabilität und/oder Regulierung der Viskosität der Masse abgestellt. In einer bevorzugten Ausführungsform wird pyrogene Kieselsäure (z.B. Aerosil^{™} der Firma Degussa) eingesetzt.

Die Auswahl des Schlagzähmodifikators kann insbesondere von der Eigenschaft abhängen, die Sprödigkeit des Transferklebebands, insbesondere der Klebemasse, zu verringern. Entsprechend kann beispielsweise eine auf Silikon oder Nitrilkautschukpartikeln oder Kombinationen davon basierende Komponente, welche bevorzugt eine epoxidfunktionelle Hülle aufweist (sogenannte Elastomer-Core-Shell-Partikel), gewählt werden. Solche Schlagzähmodifikatoren werden z.B. von der Firma Evonik unter dem Markennamen Albidur^{®} oder von der Firma Seilacher und Schill unter dem Markennamen Struktol^{®} vertrieben.

Als Härter bzw. Vernetzer werden heißhärtende 1-Komponenten Vernetzer bevorzugt. Um eine gewisse Lagerfähigkeit des Klebebands auch bei Raumtemperatur zu erhalten, können Härter in Feststoffform verwendet werden. Damit ist gewährleistet, dass die Starttemperatur der Aushärtung weit über Raumtemperatur, beispielsweise bei etwa 100 °C oder darüber liegt. Als Härter kann beispielsweise Dicyandiamid zum Einsatz kommen, erhältlich zum Beispiel als Dyhard 100 S bei der Firma AlzChem.

Um die Reaktionsgeschwindigkeit der Aushärtung zu erhöhen bzw. die Starttemperatur der Aushärtung einzustellen, werden Beschleuniger eingesetzt. Dabei handelt es sich beispielsweise um tertiäre Amine, substituierte Imidazole oder Harnstoffderivate, so z.B. Dyhard UR 500 der Firma Alzchem.

Das erfindungsgemäße Klebeband weist ferner eine Trägerschicht (in Form eines Release Liners) auf, auf der die Klebemasse aufgebracht ist. Die Trägerschicht dient u.a. dem Anbringen der Klebemasse an der gewünschten Stelle eines Substrats und ist vorzugsweise so beschaffen, dass sie sich leicht (beispielsweise von Hand) von der Klebemasse ablösen lässt. Außerdem erlaubt die Trägerschicht eine gerollte Lagerung des erfindungsgemäßen Klebebandes, ohne dass benachbarte Lagen der Klebemasse aneinander haften bleiben.

Bei der erfindungsgemäßen Rezeptur der Klebemasse hat sich ein besonders vorteilhaftes Fließverhalten herausgestellt, insbesondere bezüglich des Speichermoduls G' bei Raumtemperatur (z.B. bei 23 °C) und bei höheren Aushärtungstemperaturen (insbesondere bei z.B. etwa 100 °C oder etwa 120 °C).

Der Speichermodul G' ist eine Komponente des Elastizitätsmoduls G*, der sich aus einem Real- und einem Imaginärteil zusammensetzt. Der Speichermodul G' bildet dabei den Realteil ab und ist ein Maß für die bei einer Scherung vom Material gespeicherte mechanische Energie, insbesondere die bei einer Scherung vom Material reversibel gespeicherte mechanische Deformationsenergie. Der Imaginärteil, der Verlustmodul (G"), gibt Auskunft über die bei einem Scherexperiment vom Material dissipierte Energie bzw. die Verlustenergie. Flüssigkeiten können bei einem Scherexperiment keine mechanische Energie speichern. Ihr Speichermodul ist demnach nahezu null. Dahingegen wird bei viskoelastischen Stoffen ein Teil der Energie gespeichert und ein anderer Teil der Energie dissipiert. Das Verhältnis von Verlustmodul (G") zu Speichermodul (G'), auch Verlusttangens genannt, ist ein Maß für die Fähigkeit eines Materials mechanische Energie zu speichern. Bei Festkörpern ist in der Regel der Speichermodul (G') wesentlich größer als der Verlustmodul (G").

In einer bevorzugten Ausführungsform umfasst die Klebemasse 20 bis 50 Gewichtsprozent, bevorzugt 20 bis 40 Gewichtsprozent, mindestens eines Epoxidharzes mit einem Epoxid-Äquivalent-Gewicht von 570 - 595 g/Äquivalent.

In einer bevorzugten Ausgestaltung umfasst die Klebemasse 15 bis 40 Gewichtsprozent mindestens eines Epoxidharzes mit einem Epoxid-Äquivalent-Gewicht von 195 g/Äquivalent zur Modifikation der Schlagzähigkeit.

In einer Weiterbildung umfasst die Klebemasse 2 bis 8 Gewichtsprozent mindestens eines Epoxidharzes mit einem Epoxid-Äquivalent-Gewicht von 300 g/Äquivalent zur Modifikation der Schlagzähigkeit.

In einer weiter bevorzugten Ausführungsform umfasst die Klebemasse 0 bis 19 Gewichtsprozent Nitrilkautschuk zur Modifikation der Schlagzähigkeit.

In einer weiter bevorzugten Weiterbildung umfasst die Klebemasse 7 Gewichtsprozent, mindestens des thermoplastischen Polymers.

Der Speichermodul der erfindungsgemäßen Rezeptur der Klebemasse hat sich in einer Vielzahl von Versuchen derart erwiesen, dass bei Raumtemperatur eine haftklebrige Masse gebildet wird, deren Fließfähigkeit durch Erwärmen auf ungefähr 100°C oder mehr aber derart zunimmt, dass ein gutes Ausfließen, jedoch mit fester Verankerung, ermöglicht wird. Außerdem entstand durch weiteres Erwärmen eine dauerhafte, dichte und strapazierfähige Verklebung, welche insbesondere zum Versiegeln von beispielsweise Kennzeichnungssystemen vorteilhaft war.

Dies hat unter anderem den Vorteil, dass das Klebeband sich bei Raumtemperaturen einfach applizieren lässt, durch Erhitzung jedoch eine höhere Flüssigkeit bzw. niedrigere Viskosität aufweist, wodurch sich das Transferklebeband beispielsweise besser an eine Form oder Oberfläche anpassen lässt und insbesondere auch zu einer verbesserten Abdichtung bzw. Versiegelung der Klebestelle führt.

Bevorzugt erfolgt die vollständige Aushärtung der Klebemasse des Transferklebebands nicht unter einer Temperatur von ungefähr 100 °C. Auf dieser Weise kann das Anbringen oder Applizieren des Transferklebebandes bei Raumtemperatur erfolgen, wobei dann noch ein Modifizieren, Zuschneiden, und/oder Verarbeiten des Transferklebebands möglich ist. Dies hat entsprechend vor allem praktische Vorteile, indem diverse Anwendungen unter Raumtemperatur gegebenenfalls noch modifiziert werden können, die feste und endgültige Klebeverbindung allerdings erst bei höheren Temperaturen erfolgt.

Die Aushärtung der Klebemasse erfolgt bevorzugt irreversibel. Folglich kann die Klebemasse des Transferklebebands insgesamt als Duroplast ausgebildet sein. Entsprechend ist das Transferklebeband nach Aushärtung auch bei Temperaturen über ungefähr 100 °C oder unter Raumtemperatur nicht modifizierbar bzw. verändert seine Viskosität nicht wesentlich. Ebenfalls ist bevorzugt vorgesehen, dass die Klebemasse im ausgehärtetem Zustand nicht durch beispielsweise Hydrolyse, saure Hydrolyse oder enzymatische Verdauung zersetzt wird.

Das Transferklebeband ist bevorzugterweise im nicht ausgehärtetem Zustand bei einer Temperatur unter 100 °C, bevorzugt zwischen ungefähr 18°C und ungefähr 25°C, besonders bevorzugt bei ungefähr 23 °C haftklebrig. Entsprechend lässt sich das Transferklebeband leicht auf Oberflächen positionieren und bei Bedarf auch repositionieren. Durch die Haftklebrigkeit bleibt das Transferklebeband auch nach dem Applizieren an der vorgesehenen Stelle, wird allerdings erst nach Aushärtung bei höheren Temperaturen endgültig befestigt. Dies hat zudem den Vorteil, dass das Applizieren bis zur Aushärtung reversibel ist, weshalb weitere Modifikationen und/oder vorteilhaftere Anpassungen nach dem ersten Applizieren möglich sind. Entsprechend können eventuelle Applikationsfehler somit verhindert werden.

Um eine Applikation des Transferklebebands zu ermöglichen, zu erleichtern und/oder zu fördern weist das Klebeband, insbesondere die Klebemasse, bei Raumtemperatur bevorzugt einen derartigen Speichermodul G' auf, dass eine Verformung des Klebebandes möglich ist. Beispielsweise kann vorgesehen sein, dass beim Anbringen des Transferklebebands auf einer Oberfläche ein vorgegebener Druck ausgeübt werden kann, damit sich das Transferklebeband an die Form der Oberfläche anpassen kann, ohne dass die Struktur, Dichte und/oder Dicke des Transferklebebands an dieser Stelle durch diesen Druck wesentlich verändert wird. Andererseits kann der Speichermodul G' der Klebemasse durch Erwärmung, beispielsweise auf eine Temperatur von ungefähr 100 °C oder darüber, derart verringert werden, dass eine optimale, gleichmäßige Verteilung der Klebemasse durch Verfließen ermöglicht wird. Dennoch sollte der Speichermodul nach Aushärtung wiederum hoch genug sein, um eine dauerhafte Befestigung, Abdichtung und/oder Versiegelung zu gewährleisten, welche vor externen Faktoren wie beispielsweise Verschleiß schützt.

Durch die vorteilhaften Eigenschaften des erfindungsgemäßen Transferklebebands wird ein hitzeaktivierbares, strukturelles, latent haftklebendes Transferklebeband bereitgestellt, welches die Eigenschaften eines herkömmlichen Klebebands und eines Flüssigklebstoffs ideal verbindet und sich für eine Vielfalt von Anwendungen eignet. Beispielsweise kann das Transferklebeband auch als Stanzteil oder in Streifenform ausgebildet sein. Das Transferklebeband wird in seinem leicht haftklebrigen Zustand auf einen der beiden Fügepartner aufgebracht, sodann mit dem zweiten Fügepartner verbunden und anschließend in einem Erwärmungsprozess ausgehärtet, wodurch die strukturelle Festigkeit der Verbindung hergestellt wird. Der Erwärmungsprozess kann dabei beispielsweise in einem Ofen stattfinden oder auch mit Hilfe von Infrarot-Erwärmung bzw. per Induktion erfolgen.

Das Transferklebeband, insbesondere die Klebemasse, hat dabei neben der klebenden bevorzugterweise auch die Eigenschaft, eine Oberfläche im ausgehärteten Zustand abzudichten, zu versiegeln und/oder vor physikalischen und/oder chemischen Einwirkungen zu schützen.

Das Transferklebeband ist besonders strapazierfähig und weist eine hohe, dauerhafte Robustheit auf. So ist die Klebeverbindung oder das Transferklebeband in ausgehärtetem Zustand gegen eine Vielfalt von Einflüssen beständig. Beispielsweise wird in ausgehärtetem Zustand ein Schutz gegen mechanische Einflüsse wie z. B. Kratzen, Werfen oder Aneinanderreiben von Teilen gewährleistet und die Klebeverbindung weist bevorzugt eine Hitzebeständigkeit bis zu 190 °C auf.

Zudem ist eine Beständigkeit gegen Einflüsse bei der Reinigung, beispielsweise mit einer Bürste, einem Wasserstrahl, und/oder alkalischen oder sauren Reinigungsmitteln, gegeben, ebenso gegen Feuchtwärme, wie z.B. in einer Spülmaschine oder einem Dampfsterilisator. Insbesondere kann das Transferklebeband in ausgehärtetem Zustand eine Beständigkeit aufweisen, welche gegen in Sterilisationsverfahren verwendete oder dabei entstehende Komponenten, beispielsweise gegen Wasserstoffperoxidradikale die bei Plasmasterilisationsverfahren, z.B. beim sogenannten STERRAD-Verfahren im Wasserstoffperoxidremoteplasma, entstehen, schützt.

Solche extremen Anforderungen können durch das erfindungsgemäße Transferklebeband bzw. die Rezeptur der Klebemasse sehr gut erfüllt werden, da die Klebemasse nicht nur die Funktion der Klebung erfüllt, sondern gleichzeitig eine Versiegelung einer Oberfläche gewährleistet Entsprechende Untersuchungen haben gezeigt, dass das erfindungsgemäße Transferklebeband, insbesondere die Klebemasse, in ausgehärtetem Zustand biokompatibel ist. Dies hat unter anderem den Vorteil, dass einerseits beispielsweise eine Berührung mit der Haut, dadurch, dass das Transferklebeband nicht zytotoxisch ist, keine allergischen Reaktionen hervorruft und andererseits zu sterilisierende Flüssigkeiten oder Feststoffe hinter einer zu verklebenden oder versiegelnden Oberfläche auch weiterhin nach dem Aushärten des Transferklebebandes für medizinischen Anwendungen geeignet sind. Insbesondere ist das Transferklebeband hypoallergen.

Das Transferklebeband kann bevorzugterweise ein Flächengewicht zwischen ungefähr 5 g/m² und ungefähr 100 g/m², besonders bevorzugt zwischen ungefähr 15 g/m² und ungefähr 50 g/m², aufweisen.

Beispielsweise kann das Transferklebeband derart hergestellt sein, dass dieses grundsätzlich eine Dicke von ungefähr 5 µm bis ungefähr 150 µm, bevorzugt ungefähr 20 µm bis ungefähr 50 µm aufweist. Dies hat unter anderem den Vorteil, dass das Transferklebeband leicht und kosteneffizient hergestellt werden kann, ohne dass dabei die für eine Applikation notwendige Struktur und beispielsweise die vorteilhaften Klebe-, Versiegelungs- und Dichteigenschaften verloren gehen.

Die vorliegende Erfindung betrifft ferner ein Verfahren zum Verkleben zweier Fügepartner (z.B. eines Gegenstandes mit einem Substrat). Beispielsweise kann erfindungsgemäß ein Rückspiegel für ein Auto mit der Windschutzscheibe verklebt werden. Hierbei wird zunächst der Gegenstand auf der zu verklebenden Seite mit einem erfindungsgemäßen Klebeband beschichtet. Die Beschichtung kann unmittelbar vor den weiteren Verfahrensschritten erfolgen, sie kann aber auch zeitlich und/oder räumlich getrennt davon erfolgen. Beispielsweise kann die Beschichtung des Gegenstandes durch den Hersteller des Gegenstandes erfolgen, alternativ kann sie durch das Unternehmen erfolgen, das die Verklebung des Gegenstandes mit dem Substrat vornimmt.

Die Verklebung erfolgt in der Weise, dass zunächst das Klebeband abgerollt wird und die dabei freigelegte klebende Oberfläche auf dem ersten der beiden Fügepartner (Gegenstand oder Substrat) appliziert. Anschließend wird der die gegenüber liegende Seite der Klebeschicht sowohl bedeckende, als auch gleichzeitig als Träger dafür fungierende Release Liner entfernt und die nun freigelegte Klebeschicht mit dem zweiten Fügepartner in Verbindung gebracht. Da die Klebemasse vor der Aushärtung nur eine haftklebende Wirkung aufweist, ist ein Repositionieren der Fügepartner noch möglich, bis die gewünschte Position gefunden wurde. Je nach Abmessung der Fügepartner kann es erforderlich sein, diese abzustützen oder anderweitig zu fixieren, um den Kontakt zwischen den beiden zu verklebenden Oberflächen aufrechtzuerhalten.

Dann wird der Klebstoff des Klebebandes durch Erhitzen auf eine Temperatur von über ungefähr 100 °C, bevorzugt von über ungefähr 120 °C ausgehärtet, sodass eine strukturelle Verklebung zwischen den beiden Fügepartnern erfolgt. Nach der Aushärtung sind diese fest, d.h. strukturell, miteinander verbunden und die Klebestelle ist durch die vorteilhaften Eigenschaften des erfindungsgemäßen Klebebandes abgedichtet und damit gegen äußere Einflüsse geschützt.

Die vorliegende Erfindung betrifft ferner ein Verfahren zum Verkleben eines im Wesentlichen flachen Gegenstandes mit einem Substrat. Im Wesentlichen flache Gegenstände können beispielsweise flächenförmige bzw. folienartige Kennzeichnungselemente, Schilder oder Markierungselemente sein und beispielsweise eine Beschriftung, ein Logo und/oder andere graphische Darstellungen tragen. Erfindungsgemäß wird der Gegenstand auf beiden Seiten mit einem Klebeband gemäß einem der vorhergehenden Ansprüche beschichtet. Die Beschichtung kann auf einer oder auf beiden Seiten unmittelbar vor den weiteren Verfahrensschritten erfolgen, sie kann aber auch zeitlich und/oder räumlich getrennt davon erfolgen. Auch eine zeitliche und/oder räumliche Trennung der Beschichtungsvorgänge auf beiden Seiten ist möglich. Beispielsweise kann die Beschichtung des Gegenstandes durch den Hersteller des Gegenstandes erfolgen, alternativ kann sie durch das Unternehmen erfolgen, das die Verklebung des Gegenstandes mit dem Substrat vornimmt.

Vor Applikation des Gegenstands auf dem Substrat wird der die Klebeschicht zum Substrat hin noch bedeckende Release Liner entfernt, der Release Liner, der die auf der gegenüberliegenden Seite des Gegenstands befindliche Klebeschicht bedeckt, verbleibt zunächst noch darauf. Dieser kann dann beispielsweise nach dem folgenden Positionierungsschritt entfernt werden.

Anschließend wird der Gegenstand so mit dem Substrat in Verbindung gebracht wird, dass er durch die haftklebende Wirkung des Klebebandes auf einer Seite des Gegenstandes am Substrat gehalten wird. Da die Klebemasse vor der Aushärtung nur eine haftklebende Wirkung aufweist, ist ein Repositionieren des Gegenstandes auf dem Substrat möglich, bis die gewünschte Position gefunden wurde.

Dann wird der Klebstoff des Klebebandes durch Erhitzen auf eine Temperatur von über ungefähr 100 °C, bevorzugt von über ungefähr 120 °C ausgehärtet, sodass eine strukturelle Verklebung von Gegenstand und Substrat erfolgt. Nach der Aushärtung ist der Gegenstand fest mit dem Substrat verbunden und die Klebestelle ist durch die vorteilhaften Eigenschaften des erfindungsgemäßen Klebebandes abgedichtet und damit gegen äußere Einflüsse geschützt. Zusätzlich wird auch die Oberfläche des im Wesentlichen flachen Gegenstandes durch die auf der anderen Seite befindliche ausgehärtete Klebemasse versiegelt. Da die erfindungsgemäße Klebemasse zumindest nach dem Aushärten bevorzugterweise für sichtbares Licht im Wesentlichen transparent ist, ist der versigelte Gegenstand und insbesondere eine ggf. auf diesem gegebene Beschriftung nach dem Aushärten der Klebemasse lesbar bzw. erkennbar.

Bevorzugterweise steht das Klebeband nach dem Beschichten des Gegenstandes zumindest auf der nicht mit einem Substrat verklebten Oberfläche des Gegenstands über die Ränder des Gegenstandes so weit über, dass nach dem Aushärten der Klebemasse auch die Ränder von der Klebemasse abgedeckt und somit versiegelt sind. Die maximale Dicke des im Wesentlichen flachen Gegenstandes hängt sowohl von der Dicke des Klebebandes als auch vom Überstand des Klebebandes über die Ränder des Gegenstandes ab, wenn auch eine Versiegelung der Ränder nach dem Aushärten gewünscht ist.

Die Klebemasse ist dabei bevorzugt derart ausgebildet, dass die Klebemasse durch eine entsprechende Schmelzviskosität ausreichend fließfähig ist, jedoch keine Schmelzviskosität aufweist, welche so niedrig ist, dass ein Abfließen des Klebstoffes bei der Aushärtung durch die Schwerkraft an schrägen oder senkrechten Flächen erfolgt. So können die beiden Klebeschichten miteinander und mit dem Gegenstand verfließen und so beispielsweise eine Einheit bilden, wodurch auch die Ecken und Kanten des Gegenstandes versiegelt werden und schädigenden und/oder unerwünschten Einflüssen möglichst wenig Angriffsfläche geboten wird. Die benötigte Schmelzviskosität kann beispielsweise empirisch durch Auswahl und Einstellen der Verhältnisse von Epoxidharzkomponenten und Bindemittel bestimmt werden.

Beispielsweise kann der zu verklebende, im Wesentlichen flache Gegenstand eine bedruckte Folie oder ein bedrucktes Papier sein. Die Folie kann beispielsweise aus PEEK (Polyetherethylketon), PPSU (Polyphenylensulfon), PET (Polyethylenterephtalatat), PPS (Polyphenylensulfid), PEI (Polyetherimid), PEN (Polyethylennapthalat), PSU (Polysulfon), PES (Polyethersulfon) oder ähnlichen Materialien bestehen. Die Folie kann eine Dicke von 7 µm bis 200 µm, bevorzugt 20 µm bis 75 µm haben.

Die gegebenenfalls bereits bedruckte Folie ist bevorzugt beidseitig mit dem erfindungsgemäßen Klebeband laminiert. Die untere Schicht der Klebemasse dient in erster Linie als Klebstoff, die obere Schicht dient als Siegelschicht. Die Dicke der oberen und unteren Schicht kann dabei gleich, oder auch unterschiedlich sein.

Statt einer Folie können beispielsweise auch Folienlaminierungen oder ähnliche Produkte erfindungsgemäß zum Einsatz kommen.

Die vorliegende Erfindung beinhaltet ferner, ein erfindungsgemäßes Klebeband zum Abdecken bzw. Versiegeln von Markierungen, Gravuren, etc. auf einem Substrat und auch von beispielsweise Aufklebern die mittels eines anderen Klebers auf dem Substrat angebracht worden sind. Hierzu wird ein erfindungsgemäßes Klebeband so über dem zu versiegelnden Bereich angeordnet, dass der gewünschte Bereich abgedeckt ist und insbesondere eine vorhandene Markierung oder ein Aufkleber vollständig (und ggf. über den Rand des Aufklebers hinaus) überdeckt wird. Durch die haftklebende Eigenschaft des erfindungsgemäßen Klebebades im nicht-ausgehärteten Zustand lässt sich zum einen das Klebeband bei Bedarf neu positionieren, zum anderen verbleibt es nach der Positionierung an der gewählten Stelle, auch wenn das Substrat bewegt wird.

Wenn das verwendete Klebeband einen Release Liner aufweist, kann dieser nun entfernt werden, sodass nur mehr die Klebemasse auf dem Substrat verbleibt. Dann wird der Klebstoff des Klebebandes durch Erhitzen auf eine Temperatur von über ungefähr 100 °C, bevorzugt von über ungefähr 120 °C ausgehärtet, sodass eine strukturelle Verbindung von Klebeband und Substrat erfolgt. Dadurch wird das Substrat im Bereich des Klebebandes versiegelt und der überdeckte Bereich (und somit die Markierung, die Gravur, der Aufkleber, etc.) ist vor äußeren Einflüssen geschützt.

Ferner können aus dem erfindungsgemäßen Klebeband auch Stanzteile oder anderweitig vorgeformte Teile gefertigt werden, die auf den jeweiligen Gegenständen (d.h. den anzubauenden Teilen oder Folien) vorappliziert werden können.

Soweit technisch durchführbar, können alle vorstehend einzeln beschriebenen Merkmale miteinander kombiniert und/oder ausgetauscht werden, ohne den Bereich der Erfindung zu verlassen.

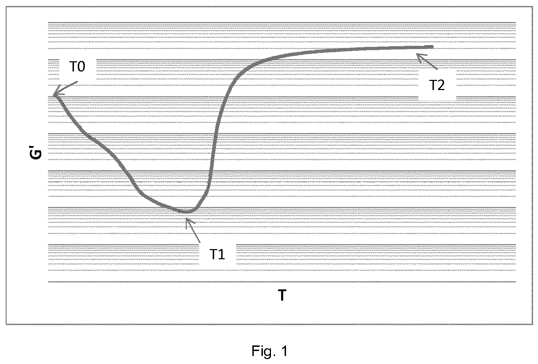

Kurze Beschreibung der Figuren
- Figur 1: zeigt schematisch den Verlauf des Speichermoduls G' für das erfindungsgemäße Beispiel 1 über die Zeit während des Aushärtevorgangs.

### Detaillierte Beschreibung bevorzugter Ausführungsbeispiele

Im Folgenden werden einige Beispielrezepturen für die erfindungsgemäße Klebemasse beschrieben und mit einer bekannten Klebemasse verglichen. Dabei wurden folgende Testmethoden zur Bestimmung der jeweiligen Parameter eingesetzt:

### Messmethoden:

### Rheologie:

Die Bestimmung des Speichermoduls G' erfolgte in einem Platte/Platte-Rheometer (Anton Paar MCR 301). Zur Probenherstellung wurden 4 Lagen des Transferklebebandes (40 g/m²) aufeinander gelegt (Kreise, Durchmesser 18 mm) und im Rheometer im Osziallationsmodus einem Temperatursweep unterzogen. Starttemperatur war 20 °C, Heizrate 10 K/min bis 170 °C, dann isotherm 170 °C, Auslenkungsamplitude 1 %, Kreisfrequenz 10 rad/s, konstante Normalkraft 0,2 N. Aus der Wertetabelle wurden die Speichermodule G' bei der entsprechenden Temperatur abgelesen.

Figur 1 zeigt schematisch den Verlauf des Speichermoduls G' für das erfindungsgemäße Beispiel 1 über die Zeit während des Aushärtevorgangs. Der Verlauf des Graphen verändert sich nicht wesentlich für die anderen erfindungsgemäßen Beispiele. Der Wert von G' wird auf der Ordinate logarithmisch aufgetragen. Zum Zeitpunkt T0 beträgt die Temperatur Raumtemperatur (etwa 23 °C). Vom Zeitpunkt T0 bis zum Zeitpunkt T2 wird die Temperatur der Klebemasse kontinuierlich erhöht. Ab dem Zeitpunkt T2 wird die Wärmezufuhr gestoppt und die Klebemasse kann wieder abkühlen.

Es ist ersichtlich, dass der Speichermodul G' zum Zeitpunkt T1 seinen niedrigsten Wert annimmt und danach steil ansteigt, d.h. zu diesem Zeitpunkt setzt die Vernetzung ein und die Klebemasse beginnt auszuhärten. Für das erfindungsgemäße Beispiel 1 ist dies bei etwa 135 °C der Fall.

Der Speichermodul G' nach Aushärtung ergibt als der Wert des Plateaus, das die G'-Kurve am Ende der Aufheizkurve beschreibt. G' ändert sich dort nicht mehr stark, da die Aushärtung abgeschlossen ist.

### Klebkraftmessunq:

Die Messung der Klebkraft erfolgt an dem nicht-ausgehärteten Film bei Raumtemperatur und unter einer 180°-Schälfestigkeit in Anlehnung an DIN ISO 1939 bei Normklima (23°C, 50 Prozent relative Luftfeuchtigkeit). Als Substrat dient Edelstahl. Ein Streifen des Transferfilms (Flächengewicht 40 g/m², Breite 25 mm) wird dabei auf das Substrat aufgebracht und rückseitig mit einem Streifen Polyesterfolie abgedeckt. Anschließend wird mit einer Rolle (Gewicht 5 kg) zweimal über den Probestreifen gerollt (5 m/min). Der Prüfling wird 10 Minuten bei Normklima konditioniert und anschließend wird die Abzugskraft bei einem Abzugswinkel von 180° und einer Geschwindigkeit von 300 mm/min gemessen. Nicht-haftklebrige Systeme würden bei der Präparation schon nicht haften oder ergäben bei der Messung null oder sehr geringe Werte. Als haftklebrig im Sinne dieser Erfindung können die Transferklebebänder dann angesehen werden, wenn die so gemessene Klebkraft über 5 N/25 mm liegt.

### Waschtest:

Zur Probenvorbereitung wird eine Folie aus PEEK (Polyetheretherketon, Dicke 23 µm) mit dem Transferfilm laminiert. Anschließend wurden Stücke in Größe von 6 mm bei 6 mm ausgeschnitten und auf Platten aus Edelstahl geklebt (Vorbehandlung des Edelstahls: Sandgestrahlt, Strahlmittel Edelkorund, ca. 120 µm). Auf die so aufgebrachte Folie wird ein weiteres Stück des Transferfilms in Größe von 7 mm bei 7 mm aufgebracht, so dass sich an allen Seiten ein überstehender Rand ergibt. Anschließend wird der Prüfling bei 140°C für 10 Minuten im Umluftofen ausgehärtet. Die Prüflinge werden mehreren Waschzyklen unterworfen. Ein Waschzyklus besteht aus folgenden Schritten: 1) 2 Stunden und 15 Minuten in Geschirrspülmaschine bei 70°C, Reinigungsmittel: Somat Spültab der Fa. Henkel, 2) 15 Minuten im Ultraschallbad bei 80°C, Reinigungsmittel deconex^{®}28 Alkaone- X der Fa. Borer Chemie AG, 3) Abspülen unter fließendem Wasser, 20 Sekunden, 4) 15 Minuten im Ultraschallbad bei 70°C, Reinigungszusatz: Neodisher N der Fa. Chemische Fabrik Dr. Weigert GmbH & Co. KG, 5) Abspülen unter fließendem Wasser, 20 Sekunden, 6) 30 Minuten Trocknen im Umluftofen bei 110°C, 7) 15 Minuten im Druckkochtopf in Wasserdampf behandeln. Der Test gilt als bestanden, wenn 50 Zyklen unbeschadet überstanden sind, d.h. keine Ablösung der Folie vom Stahlsubstrat erfolgt ist.

### Materialien:

Die genannten Materialien sind nur exemplarischer Natur. Die Erfindung schließt auch ähnliche, naheliegende und dem Fachmann geläufige Materialien, Materialkombinationen und Mischverhältnisse mit ein.

### Epoxidharze:

Epoxidharze können epoxyfunktionalisierte Oligomere oder Polymere auf Basis Bisphenol A oder Bisphenol F sein. Sie können flüssig oder fest sein und sich in ihren Epxyäquivalenten unterscheiden. Die Zusammenstellung der Epoxidharze ist so zu wählen, dass eine ausreichende Festigkeit und, zusammen mit den anderen Rezepturbestandteilen, ein geeignetes Fließverhalten resultiert. Beispiele für feste Epoxidharze sind die Araldite^{™} GT, für flüssige Harze die Araldite^{™} GY der Fa. Huntsman, die Epon^{™}-Reihe der Fa. Hexion oder Bakelite EP^{™} der Fa. Bakelite. Besonders geeignet sind mittelviskose Epoxidfestharze mit einem Erweichungspunkt von 60-90°C. In den Beispielen wurde Araldit GT 7072 verwendet.

### Härter:

Um eine gewisse Lagerfähigkeit des Klebebands auch bei Raumtemperatur zu erhalten werden Härter in Feststoffform verwendet. Damit ist gewährleistet, dass die Starttemperatur der Aushärtung weit über Raumtemperatur, hier über 100°C liegt. Als Härter dient in den Beispielrezepturen Dicyandiamid, erhältlich zum Beispiel als Dyhard 100 S bei der Fa. AlzChem.

### Beschleuniger:

Um die Reaktionsgeschwindigkeit der Aushärtung zu erhöhen bzw. die Starttemperatur der Aushärtung einzustellen, werden Beschleuniger eingesetzt. Dabei handelt es sich beispielsweise um tertiäre Amine, substituierte Imidazole oder Harnstoffderivate. In den Beispielen wurden als Beschleuniger Dyhard UR 500 der Fa. Alzchem eingesetzt.

### Schlagzähmodifikatoren:

Als Schlagzähmodifikatoren wurden Elastomer-Core-Shell-Partikel eingesetzt, wobei der Elastomeranteil über die epoxidfunktionalisierte Oberfläche in die Rezeptur gebunden wird. Als Elastomere kommen zum Beispiel Nitrilkautschuk oder Silikonkautschuk oder Kombinationen davon zur Anwendung. Solche Schlagzähmodifikatoren werden von der Fa. Evonik unter dem Markennamen Albidur^{®} oder von Seilacher und Schill unter dem Markennamen Struktol^{®} vertrieben. In den Beispielen 1 und 3 und im Gegenbeispiel wurde Struktol Polydis 3695 und Albidur EP 2240 im Verhältnis 2:1 verwendet. Im Beispiel 4 wurden diese beiden Materialien im Verhältnis 1:1 eingesetzt.

Das Verhältnis Epoxidgruppen/Härter wird in den Rezepturen über alle vorhanden Epoxidharze und epoxyhaltigen Schlagzähmodifikatoren angepasst, so dass der molare Über- bzw. Unterschuss nicht mehr als das 10-fache beträgt.

### Thermoplast:

Als Thermoplaste können heiß schmelzende Polymere eingesetzt werden. In den erfindungsgemäßen Beispielen 1, 2 und 4 wurde als Polyamide Technomelt Typen der Fa. Henkel verwendet, im erfindungsgemäßen Beispiel 3 kamen als EVA Levamelt Typen der Fa. Lanxess zum Einsatz. Das im Gegenbeispiel verwendete Polyacrylat bestand aus einem Co-Polymer aus 60 Gewichtsprozent Butylacrylat, 35 Gewichtsprozent 2-Ethylhexylacrylat und 5 Gewichtsprozent Acrylsäure, in Lösung (Ethylacetat) mit Radikalstarter Azoisobuturonitril polymerisiert zu einem mittleren Molekulargewicht (Mw) von 300.000 Dalton.

### Füllstoff:

Als Füllstoffe wurde pyrogene Kieselsäure (Aerosil^{™} der Fa. Degussa) eingesetzt.

### Herstellung der Transferklebebänder und Aushärtung:

Die hier beschriebenen Misch- und Beschichtungsverfahren sind nur exemplarischer Natur. Die Erfindung schließt auch ähnliche und naheliegende, dem Fachmann geläufige Verfahren ein, wie eine erfindungsgemäße Mischung zu einem Transferklebeband bzw. Film geformt werden kann. Auch die Aushärteverfahren sind hier nur exemplarisch dargestellt. Die Erfindung schließt alle Aushärteverfahren mit ein, die nach dem Stand der Technik benutzt werden können.

Die Rezepturbestandteile wurden in organischem Lösemittel gelöst bzw. dispergiert, so dass eine beschichtbare Viskosität entsteht. Je nach Bestandteile muss dabei ein Lösungsmittelgemisch gewählt werden, sodass die Bestandteile löslich sind bzw. sich homogen mischen lassen.

Anschließend wird die so entstandene Klebemasse mittels Rakelauftrag auf eine silikonisierte Polyesterfolie beschichtet, 10 Minuten bei Raumtemperatur und anschließend 10 Minuten bei 105 °C getrocknet. Die Auftragsmenge wird so eingestellt, dass der trockene Film ein Flächengewicht von 40 g/m² besitzt. Es können auch, je nach Anwendung, andere Flächengewichte eingestellt werden.

Neben der Mischung und Auftragung aus Lösemittel sind auch die dem Fachmann bekannten (lösemittelfreien) Heißschmelzauftragsverfahren oder Extrusionsverfahren möglich, um aus den Komponenten eine homogene Mischung zu erzeugen und daraus einen Film aufzutragen.

Das Flächengewicht des Films kann je nach Anwendung, Bedarf und Auftragsverfahren auch andere Werte zwischen 5 g/m² und 2000 g/m² einnehmen.

Wegen der hohen Aushärtetemperaturen ist der Film über eine längere Zeit lagerfähig. Je nach Lagertemperatur ergeben sich Lagerzeiten im Bereich von Wochen (bei Raumtemperatur) oder Monate (bei < 5 °C).

Der Transferfilm wird nach den beschriebenen Testverfahren weiter behandelt und vermessen.

Insbesondere erfolgt eine Aushärtung des Films auf den Substraten durch Wärmeeinwirkung. Eine typische Aushärtebedingung liegt bei 140 °C für 10 Minuten im Wärmeofen. Wärme kann beispielsweise auch durch Infrarotstrahlung, Induktion oder Ultraschall eingebracht werden.

### Beispielrezepturen:

Beispiele 1 bis 6 sind erfindungsgemäße Rezepturen. Das Gegenbeispiel zeigt eine nichterfindungsgemäße Rezeptur, wobei vor allem die Anteile des Epoxidharzes, Schlagzähmodifikators und Thermoplasts zu den erfindungsgemäßen Rezepturen unterschiedlich sind.

Eine Übersicht der jeweiligen Anteile wird durch die nachfolgende Tabelle dargestellt:

| | Beispiel 1 | Beispiel 2 | Beispiel 3 | Beispiel 4 | Gegenbeispiel |
|---|---|---|---|---|---|
| Epoxidharz | 29 % | 26 % | 29% | 30% | 7,3 % |
| Härter | 3,3 % | 3% | 3,3% | 3,3% | 2,8 % |
| Beschleuniger | 1,7 % | 1,5 % | 1,7% | 1,7% | 2,8 % |
| Schlagzähmodifikator | 53 % | 48 % | 53% | 55% | 15% |
| Thermoplast | 10% (Polyamid) | 18,5% (Polyamid) | 10% (EVA) | 10% (Polyamid) | 71% (Polyacrylat) |
| Füllstoff | 3% | 3% | 3% | 0% | 1,3% |
| Gesamt | 100% | 100% | 100% | 100% | 100% |

Die verwendeten Materialen für die Beispiele 5 und 6 entsprechen den Materialien aus Beispiel 1, wie vorstehend erläutert.

| | Beispiel 5 | Beispiel 6 | Gegenbeispiel |
|---|---|---|---|
| Epoxidharz | 42% | 29,8% | 7,3 % |
| Härter | 2,1% | 2,1% | 2,8 % |
| Beschleuniger | 2,1% | 2,1% | 2,8 % |
| Schlagzähmodifikator | 46,8% | 56% | 15% |
| Thermoplast | 4%(Polyamid) | 7%(Polyamid) | 71% (Polyacrylat) |
| Füllstoff | 3% | 3% | 1,3% |
| Gesamt | 100% | 100% | 100% |

Die Klebemassen der Beispiele 5 und 6 weisen einen vergleichsweise höheren Anteil an Festharzen auf, wie am Anteil des Epoxidharzes in Beispiel 5 sowie am Anteil des Schlagzähmodifikators in Beispiel 6 erkennbar ist. Dies geht einher mit einem vergleichsweise geringeren Thermoplast-Anteil. Insgesamt ergibt sich dadurch eine vergleichsweise höhere Festigkeit des Klebebandes.

### Messergebnisse:

Die Eigenschaften der oben genannten Beispiele wurden wie folgt gemessen:

| | Beispiel 1 | Beispiel 2 | Beispiel 3 | Beispiel 4 | Gegenbeispiel |
|---|---|---|---|---|---|
| G' bei 23°C in Pa | 60400 | 24970 | 28800 | 97430 | 138400 |
| G' bei 100°C in Pa | 208 | 35 | 120 | 40 | 9360 |
| Verhältnis G'[23 °C]/ G'[100 °C] | 290 | 715 | 240 | 2430 | 15 |
| G' nach Aushärtung in Pa | 3,2*10⁶ | 2,2*10⁶ | 2,7*10⁶ | 2,8*10⁶ | 4,4*10⁶ |
| Klebkraft bei 23 °C in N/25mm (vor Aushärtung) | 13 | 18 | 15 | 15 | 25 |
| Starttemperatur der Aushärtung in °C | 135 | 138 | 140 | 138 | 121 |
| Waschtest (Folie, nach Aushärtung) | bestanden | bestanden | bestanden | bestanden | nicht bestanden |

## Patentansprüche

1. Klebeband, insbesondere Transferklebeband, aufweisend eine auf Epoxid basierende thermisch aushärtbare Klebemasse, **dadurch gekennzeichnet, dass** die Klebemasse aus 10 bis 60 Gewichtsprozent mindestens eines Epoxidharzes mit einem Epoxid-Äquivalent-Gewicht von 570 - 595 g/Äquivalent, 1 bis 5 Gewichtsprozent mindestens eines Härters, 0 bis 5 Gewichtsprozent mindestens eines Beschleunigers, 20 bis 65 Gewichtsprozent mindestens eines Schlagzähmodifikators, 7 bis 30 Gewichtsprozent mindestens eines thermoplastischen Polymers, bevorzugt Polyamid oder Polyethylvinylacetat, und 0 bis 10 Gewichtsprozent eines Füllstoffs, bevorzugt hydrophober Kieselsäure, besteht.

2. Klebeband gemäß Anspruch 1, **dadurch gekennzeichnet, dass** die Klebemasse 20 bis 40 Gewichtsprozent mindestens eines Epoxidharzes mit einem Epoxid-Äquivalent-Gewicht von 570 - 595 g/Äquivalent umfasst.

3. Klebeband gemäß Anspruch 1 oder 2, **dadurch gekennzeichnet, dass** die Klebemasse 15 bis 40 Gewichtsprozent mindestens eines Epoxidharzes mit einem Epoxid-Äquivalent-Gewicht von 195 g/Äquivalent zur Modifikation der Schlagzähigkeit umfasst.

4. Klebeband gemäß einem der vorhergehenden Ansprüche, **dadurch gekennzeichnet, dass** die Klebemasse 2 bis 8 Gewichtsprozent mindestens eines Epoxidharzes mit einem Epoxid-Äquivalent-Gewicht von 300 g/Äquivalent zur Modifikation der Schlagzähigkeit umfasst.

5. Klebeband gemäß einem der vorhergehenden Ansprüche, **dadurch gekennzeichnet, dass** die Klebemasse 0 bis 19 Gewichtsprozent Nitrilkautschuk zur Modifikation der Schlagzähigkeit umfasst.

6. Klebeband gemäß einem der vorhergehenden Ansprüche, **dadurch gekennzeichnet, dass** die Klebemasse 7 Gewichtsprozent mindestens des thermoplastischen Polymers umfasst.

7. Klebeband gemäß einem der vorhergehenden Ansprüche, **dadurch gekennzeichnet, dass** die Aushärtung der Klebemasse nicht unter einer Temperatur von 100 °C erfolgt.

8. Klebeband gemäß einem der vorhergehenden Ansprüche, **dadurch gekennzeichnet, dass** die Aushärtung der Klebemasse irreversibel erfolgt.

9. Klebeband gemäß einem der vorhergehenden Ansprüche, **dadurch gekennzeichnet, dass** das Transferklebeband in nicht ausgehärtetem Zustand bei einer Temperatur unter 100 °C, bevorzugt zwischen 18 °C und 25 °C haftklebrig ist.

10. Klebeband gemäß einem der vorhergehenden Ansprüche, **dadurch gekennzeichnet, dass** die Klebemasse ausgebildet ist, um eine Oberfläche im ausgehärteten Zustand abzudichten, zu versiegeln und/oder vor physikalischen und/oder chemischen Einwirkungen zu schützen.

11. Klebeband gemäß einem der vorhergehenden Ansprüche, **dadurch gekennzeichnet, dass** das Klebeband, insbesondere die Klebemasse, in ausgehärtetem Zustand biokompatibel ist.

12. Klebeband gemäß einem der vorhergehenden Ansprüche, **dadurch gekennzeichnet, dass** das Klebeband ein Flächengewicht zwischen 5 g/m² und 100 g/m², bevorzugt zwischen 15 g/m² und 50 g/m², aufweist.

13. Verfahren zum Verkleben eines Gegenstandes mit einem Substrat, **dadurch gekennzeichnet, dass** der Gegenstand mit einem Klebeband gemäß einem der vorhergehenden Ansprüche beschichtet wird, wobei der Gegenstand so mit dem Substrat in Verbindung gebracht wird, dass er durch die haftklebende Wirkung des Klebebandes am Substrat gehalten wird, und wobei der Klebstoff des Klebebandes durch Erhitzen auf eine Temperatur von über 100 °C, bevorzugt von über 120 °C ausgehärtet wird, sodass eine strukturelle Verklebung von Gegenstand und Substrat erfolgt.

14. Verfahren zum Verkleben eines im Wesentlichen flachen Gegenstandes mit einem Substrat, **dadurch gekennzeichnet, dass** der Gegenstand auf beiden Seiten mit einem Klebeband gemäß einem der Ansprüche 1-12 beschichtet wird, wobei der Gegenstand so mit dem Substrat in Verbindung gebracht wird, dass er durch die haftklebende Wirkung des Klebebandes auf einer Seite des Gegenstandes am Substrat gehalten wird, und wobei der Klebstoff des Klebebandes auf beiden Seiten des Gegenstands durch Erhitzen auf eine Temperatur von über 100 °C, bevorzugt von über 120 °C ausgehärtet wird, sodass eine strukturelle Verklebung von Gegenstand und Substrat und gleichzeitig eine Versiegelung der Oberfläche des Gegenstandes erfolgt.

## Claims

1. An adhesive tape, in particular a transfer adhesive tape, having an epoxy-based thermally curable adhesive compound, **characterised in that** the adhesive compound consists of 10 to 60 weight percent of at least one epoxy resin with an epoxy equivalent weight of 570-595 g/equivalent, 1 to 5 weight percent of at least one curing agent, 0 to 5 weight percent of at least one accelerator, 20 to 65 weight percent of at least one impact modifier, 7 to 30 weight percent of at least one thermoplastic polymer, preferably polyamide or polyethylene-vinyl acetate, and 0 to 10 weight percent of a filler, preferably hydrophobic silica.

2. The adhesive tape according to claim 1, **characterised in that** the adhesive compound comprises 20 to 40 weight percent of at least one epoxy resin with an epoxy equivalent weight of 570-595 g/equivalent.

3. The adhesive tape according to claim 1 or 2, **characterised in that** the adhesive compound comprises 15 to 40 weight percent of at least one epoxy resin with an epoxyequivalent weight of 195 g/equivalent for modifying the impact resistance.

4. The adhesive tape according to any one of the preceding claims, **characterised in that** the adhesive compound comprises 2 to 8 weight percent of at least one epoxy resin with an epoxy equivalent weight of 300 g/equivalent for modifying the impact resistance.

5. The adhesive tape according to any one of the preceding claims, **characterised in that** the adhesive compound comprises 0 to 19 weight percent of nitrile rubber for modifying the impact resistance.

6. The adhesive tape according to any one of the preceding claims, **characterised in that** the adhesive mass comprises 7 weight percent of at least of the thermoplastic polymer.

7. The adhesive tape according to any one of the preceding claims, **characterised in that** the curing of the adhesive compound does not occur below a temperature of 100 °C.

8. The adhesive tape according to any one of the preceding claims, **characterised in that** the curing of the adhesive compound occurs irreversibly.

9. The adhesive tape according to any one of the preceding claims, **characterised in that** in the non-cured state the adhesive tape is tacky at a temperature below 100°C, preferably between 18°C and 25°C.

10. The adhesive tape according to any one of the preceding claims, **characterised in that** the adhesive compound is configured to caulk, to seal a surface in the cured state and/or protect a surface in the cured state from physical and/or chemical effects.

11. The adhesive tape according to any one of the preceding claims, **characterised in that** in the cured state the adhesive tape, in particular the adhesive compound, is biocompatible.

12. The adhesive tape according to any one of the preceding claims, **characterised in that** the adhesive tape has a weight per unit area between 5 g/m² and 100 g/m², preferably between 15 g/m² and 50 g/m².

13. A method for bonding an article to a substrate, **characterised in that** the article is coated with an adhesive tape according to any one of the preceding claims, wherein the article is connected with the substrate in such a way that it is held on the substrate by the adhesive action of the adhesive tape, and wherein the adhesive of the adhesive tape is cured by heating to a temperature of more than 100°C, preferably more than 120°C, so that structural bonding of the article and the substrate occurs.

14. A method for bonding a substantially flat article to a substrate, **characterised in that** the article is coated on both sides with an adhesive tape according to any one of claims 1-12, wherein the article is connected with the substrate in such a way that it is held on one side of the substrate by the adhesive action of the adhesive tape, and wherein the adhesive of the adhesive tape on both sides of the object is cured by heating to a temperature of more than 100°C, preferably more than 120°C, so that structural bonding of the article and substrate occurs and at the same time sealing of the surface of the object occurs.

## Revendications

1. Ruban adhésif, en particulier ruban adhésif de transfert, présentant une masse adhésive thermodurcissable à base d'époxy, **caractérisé en ce que** la masse adhésive consiste en 10 à 60 pour cent en poids d'au moins une résine époxy avec un poids équivalent d'époxy de 570 - 595 g/équivalent, 1 à 5 pour cent en poids d'au moins un durcisseur, 0 à 5 pour cent en poids d'au moins un accélérateur, 20 à 65 pour cent en poids d'au moins un modificateur de résistance au choc, 7 à 30 pour cent en poids d'au moins un polymère thermoplastique, de préférence un polyamide ou un polyéthyléthylamide, et 0 à 10 pour cent en poids d'un matériau de remplissage, de préférence de la silice hydrophobe.

2. Ruban adhésif selon la revendication 1, **caractérisé en ce que** la masse adhésive comprend 20 à 40 pour cent en poids d'au moins une résine époxy avec un poids équivalent d'époxy de 570 - 595 g/équivalent.

3. Ruban adhésif selon la revendication 1 ou 2, **caractérisé en ce que** la masse adhésive comprend 15 à 40 pour cent en poids d'au moins une résine époxy avec un poids équivalent d'époxy de 195 g/équivalent pour la modification de la résistance au choc.

4. Ruban adhésif selon l'une quelconque des revendications précédentes, **caractérisé en ce que** la masse adhésive comprend 2 à 8 pour cent en poids d'au moins une résine époxy avec un poids équivalent d'époxy de 300 g/équivalent pour la modification de la résistance au choc.

5. Ruban adhésif selon l'une quelconque des revendications précédentes, **caractérisé en ce que** la masse adhésive comprend 0 à 19 pour cent en poids de caoutchouc nitrile pour la modification de la résistance au choc.

6. Ruban adhésif selon l'une quelconque des revendications précédentes, **caractérisé en ce que** la masse adhésive comprend 7 pour cent en poids d'au moins du polymère thermoplastique.

7. Ruban adhésif selon l'une quelconque des revendications précédentes, **caractérisé en ce que** le durcissement de la masse adhésive ne s'effectue pas sous une température de 100 °C.

8. Ruban adhésif selon l'une quelconque des revendications précédentes, **caractérisé en ce que** le durcissement de la masse adhésive s'effectue de manière irréversible.

9. Ruban adhésif selon l'une quelconque des revendications précédentes, **caractérisé en ce que** le ruban adhésif de transfert est collant à l'état non durci à une température inférieure à 100 °C, de préférence entre 18 °C et 25 °C.

10. Ruban adhésif selon l'une quelconque des revendications précédentes, **caractérisé en ce que** la masse adhésive est configurée pour étanchéifier, sceller une surface à l'état durci et/ou protéger une surface à l'état durci contre des effets physiques et/ou chimiques.

11. Ruban adhésif selon l'une quelconque des revendications précédentes, **caractérisé en ce que** le ruban adhésif, en particulier la masse adhésive, est biocompatible à l'état durci.

12. Ruban adhésif selon l'une quelconque des revendications précédentes, **caractérisé en ce que** le ruban adhésif présente un grammage entre 5 g/m² et 100 g/m², de préférence entre 15 g/m² et 50 g/m².

13. Procédé de collage d'un objet à un substrat, **caractérisé en ce que** l'objet est revêtu d'un ruban adhésif selon l'une quelconque des revendications précédentes, dans lequel l'objet est mis en contact avec le substrat de manière à être maintenu sur le substrat par l'action adhésive du ruban adhésif, et dans lequel l'adhésif du ruban adhésif est durci par chauffage à une température supérieure à 100 °C, de préférence supérieure à 120 °C, de sorte qu'un collage structurel de l'objet et du substrat s'effectue.

14. Procédé de collage d'un objet sensiblement plat à un substrat, **caractérisé en ce que** l'objet est revêtu des deux côtés d'un ruban adhésif selon l'une quelconque des revendications 1-12, dans lequel l'objet est mis en contact avec le substrat de manière à être maintenu sur le substrat par l'action adhésive du ruban adhésif d'un côté de l'objet, et dans lequel l'adhésif du ruban adhésif est durci des deux côtés de l'objet par chauffage à une température supérieure à 100 °C, de préférence supérieure à 120 °C, de sorte qu'un collage structurel de l'objet et du substrat et, simultanément, un scellement de la surface de l'objet, s'effectuent.
